# EUROPEAN PATENT SPECIFICATION

(11) **EP 1 633 459 B1**
(45) Date of publication and mention of the grant of the patent: **09.04.2008**
(21) Application number: 04755229.4
(22) Date of filing: 14.06.2004
(51) Int. Cl.: B01D 53/86

(54) **AIR PURIFICATION SYSTEM COMPRISING A CATALYST AND A LIGHT SOURCE**
EINEN KATALYSATOR UND EINE LICHTQUELLE UMFASSENDES LUFTREINIGUNGSSYSTEM
SYSTEME DE PURIFICATION D'AIR COMPRENANT UN CATALYSEUR ET UNE SOURCE LUMINEUSE

(30) Priority: 19.06.2003 US 464942
(43) Date of publication of application: 15.03.2006
(73) Proprietor: CARRIER CORPORATION, Farmington, Connecticut 06034-4015 (US)
(72) Inventor: WEI, Di, Ellington, Connecticut 06029 (US); RADHAKRISHNAN, Rakesh, Vernon, CT 06066 (US); VANDERSPURT, Thomas, H., Glastonbury, CT 06033 (US)
(74) Representative: Booth, Catherine Louise
(86) International application number: PCT/US2004/018918
(87) International publication number: WO 2004/112941

(56) References cited:
- US-A- 4 302 490
- US-A1- 2002 170 815
- PATENT ABSTRACTS OF JAPAN vol. 018, no. 568 (C-1266), 31 October 1994 (1994-10-31) -& JP 06 205930 A (EBARA INFILCO CO LTD; others: 01), 26 July 1994 (1994-07-26) -& DATABASE WPI Section Ch, Week 199434 Derwent Publications Ltd., London, GB; Class J01, AN 1994-275582 XP002305841 -& JP 06 205930 A (EBARA INFILCO KK) 26 July 1994 (1994-07-26)

## Description

The present invention relates generally to a manganese oxide/titanium dioxide photocatalyst/thermocatalyst coating that oxidizes gaseous contaminants, including volatile organic compounds, and decomposes ozone that adsorb onto the surface to form carbon dioxide, water, and other substances.

Indoor air can include trace amounts of contaminants, including ozone and volatile organic compounds such as formaldehyde, toluene, propanal, butene, and acetaldehyde. Absorbent air filters, such as activated carbon, have been employed to remove these contaminants from the air. As air flows through the filter, the filter blocks the passage of the contaminants, allowing contaminant free air to flow from the filter. A drawback to employing filters is that they simply block the passage of contaminants and do not destroy them. In addition, air filters are not effective to block ozone. JP-A-6 205 930 discloses a gas purifier having a multiple oxide catalyst. US 2002/0170815 discloses a gas purifier having a photocatalyst and an ozone decomposing catalyst.

Titanium dioxide has been employed as a photocatalyst in an air purifier to destroy contaminants. When the titanium dioxide is illuminated with ultraviolet light, photons are absorbed by the titanium dioxide, promoting an electron from the valence band to the conduction band, thus producing a hole in the valence band and adding an electron in the conduction band. The promoted electron reacts with oxygen, and the hole remaining in the valence band reacts with water, forming reactive hydroxyl radicals. When a contaminant adsorbs onto the titanium dioxide catalyst, the hydroxyl radicals attack and oxidize the contaminants to water, carbon dioxide, and other substances.

Photocatalytically, titanium dioxide alone is less effective in decomposing ozone. Ozone (O₃) is a pollutant that is released from equipment commonly found in the workplace, such as copiers, printer, scanners, etc. Ozone can cause nausea and headaches, and prolonged exposure to ozone can damage nasal mucous membranes, causing breathing problems. OSHA has set a permissible exposure limit (PEL) to ozone of 0.08 ppm over an eight hour period.

Ozone is a thermodynamically unstable molecule and decomposes very slowly up to temperatures of 250°C. At ambient temperatures, manganese oxide is effective in decomposing ozone by facilitating the oxidation of ozone to adsorbed surface oxygen atoms. These adsorbed oxygen atoms then combine with ozone to form an adsorbed peroxide species that desorbs as molecular oxygen.

Hence, there is a need for photocatalyst/thermocatalyst coating that oxidizes gaseous contaminants, including volatile organic compounds, and decomposes ozone that adsorb onto the photocatalytic surface to form oxygen, carbon dioxide, water, and other substances.

In accordance with the present invention, there is provided an air purification system as claimed in claim 1. In its preferred embodiments at least, a manganese oxide/titanium dioxide photocatalytic/thermocatalytic coating on a substrate purifies the air by oxidizing any contaminants that adsorb onto the coating to water, carbon dioxide, and other substances.

A fan draws air into an air purification system. The air flows through an open passage or channel of a honeycomb. The surface of the honeycomb is coated with the manganese oxide/titanium coating. An ultraviolet light source positioned between successive honeycombs activates the manganese oxide/titanium dioxide coating.

When photons of the ultraviolet light are absorbed by the manganese oxide/titanium dioxide coating, reactive hydroxyl radicals are formed. W hen a contaminant, such as a volatile organic compound, is adsorbed onto the manganese oxide/titanium dioxide coating, the hydroxyl radical attacks the contaminant, abstracting a hydrogen atom from the contaminant and oxidizing the volatile organic compounds to water, carbon dioxide, and other substances.

At room temperature, the manganese oxide /titanium dioxide coating decomposes ozone to oxygen simultaneously with oxidation of harmful volatile organic compounds. When ozone adsorbs on the coating, the manganese oxide lowers the energy barrier required for ozone decomposition, decomposing the ozone to molecular oxygen. Additionally, the manganese oxide particles on the surface of the titanium dioxide reduce the recombination rate of the electrons and the holes, increasing the photocatalytic activity of the coating. The manganese oxide /titanium dioxide coating acts simultaneously as both a photocatalyst and a thermocatalyst.

These and other features of the present invention will be best understood from the following specification and drawings.

### BRIEF DESCRIPTION OF THE DRAWINGS

The various features and advantages of the invention will become apparent to those skilled in the art from the following detailed description of the currently preferred embodiment. The drawings that accompany the detailed description can be briefly described as follows:

Figure 1 schematically illustrates an enclosed environment, such as a building, vehicle or other structure, including an interior space and an HVAC system;

Figure 2 schematically illustrates the air purification system of the present invention;

Figure 3 schematically illustrates the honeycomb of the air purification system; and

Figure 4 schematically illustrates a method of preparing the manganese oxide/titanium dioxide photocatalyst/thermocatalyst of the present invention.

### DETAILED DESCRIPTION OF THE PREFERRED EMBODIMENT

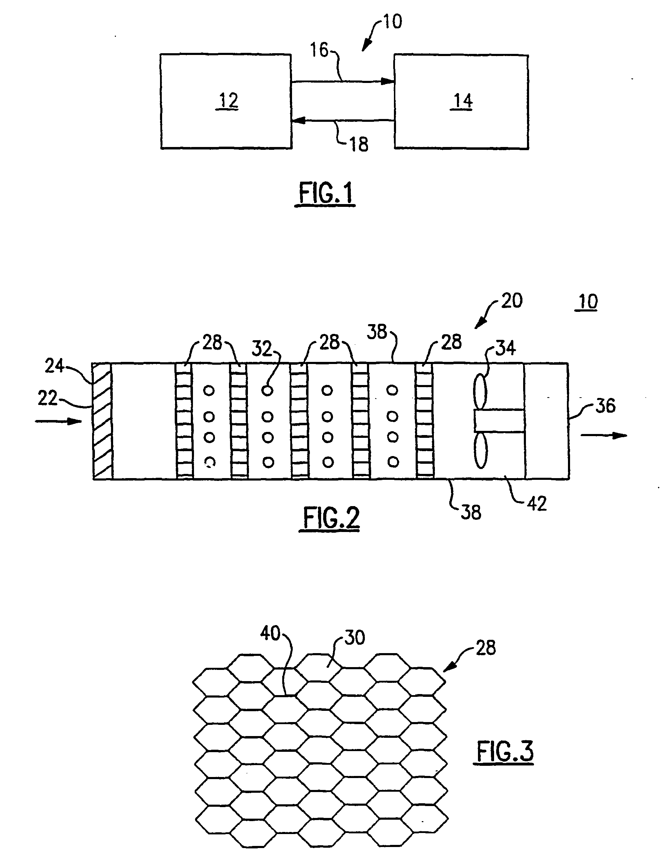

Figure 1 schematically illustrates a building, vehicle, or other structure 10 including an interior space 12, such as a room, an office or a vehicle cabin, such as a car, train, bus or aircraft. An HVAC system 14 heats or cools the interior space 12. Air in the interior space 12 is drawn by a path 16 into the HVAC system 14. The HVAC system 14 changes the temperature of the air drawn 16 from the interior space 12. I f the HVAC system 14 is operating in a cooling mode, the air is cooled. Alternately, if the HVAC system 14 is operating in a heating mode, the air is heated. The air is then returned back by a path 18 to the interior space 12, changing the temperature of the air in the interior space 12.

Figure 2 schematically illustrates an air purification system 20 employed to purify the air in the building or vehicle 10 by oxidizing contaminants, such as volatile organic compounds and semi-volatile organic compounds, to water, carbon dioxide, and other substances. The contaminants can be aldehydes, ketones, alcohols, aromatics, alkenes, or alkanes. The air purification system 20 also decomposes ozone to oxygen. The air purification system 20 can purify air before it is drawn along path 16 into the HVAC system 14 or it can purify air leaving the HVAC system 14 before it is blown along path 18 into the interior space 12 of the building or vehicle 10. The air purification system 20 can also be a stand alone unit that is not employed with a HVAC system 14.

A fan 34 draws air into the air purification system 20 through an inlet 22. The air flows through a particle filter 24 that filters out dust or any other large particles by blocking the flow of these particles. The air then flows through a substrate 28, such as a honeycomb. I n one example, the honeycomb 28 is made of aluminum or an aluminum alloy. Figure 3 schematically illustrates a front view of the honeycomb 28 having a plurality of hexagonal open passages or channels 30. The surfaces of the plurality of open passages 30 are coated with a manganese oxide/titanium dioxide (MnOx/TiO2) photocatalytic/thennocatalytic coating 40. When activated by ultraviolet light, the coating 40 oxidizes volatile organic compounds that adsorb onto the manganese oxide/titanium dioxide coating 40. As explained below, as air flows through the open passages 30 of the honeycomb 28, contaminants that are adsorbed on the surface of the manganese oxide/titanium dioxide coating 40 are oxidized into carbon dioxide, water and other substances.

A light source 32 positioned between successive honeycombs 28 activates the photocatalytic coating 40 on the surface of the open passages 30. As shown, the honeycombs 28 and the light source 32 alternate in the air purification system 20. That is, there is a light source 32 located between each of the honeycombs 28. Preferably, the light source 32 is an ultraviolet light source which generates light having a wavelength in the range of 180 nanometers to 400 nanometers.

The light source 32 is illuminated to activate the manganese oxide/titanium dioxide coating 40 on the surface of the honeycomb 28. When the photons of the ultraviolet light are absorbed by the manganese oxide/titanium dioxide coating 40, an electron is promoted from the valence band to the conduction band, producing a hole in the valence band. The manganese oxide/titanium dioxide coating 40 must be in the presence of oxygen and water to oxidize the contaminants into carbon dioxide, water, and other substances. The electrons that are promoted to the conduction band are captured by the oxygen. The holes in the valence band react with water molecules adsorbed on the manganese oxide/titanium dioxide coating 40 to form reactive hydroxyl radicals.

When a contaminant is adsorbed onto the coating 40, the hydroxyl radical attacks the contaminant, abstracting a hydrogen atom from the contaminant. In this method, the hydroxyl radical oxidizes the contaminants and produces water, carbon dioxide, and other substances.

At ambient temperatures, manganese oxide is effective in decomposing ozone. Manganese oxide supported on titanium dioxide facilitates the decomposition of ozone to adsorbed surface oxygen atoms. These oxygen atoms then combine with ozone to form an adsorbed peroxide species that desorbs as molecular oxygen. When ozone adsorbs on the manganese oxide, the manganese oxide acts as a site for dissociative ozone adsorption by lowering the energy barrier required for ozone decomposition. Therefore, in the presence of ozone alone, the manganese oxide produces oxygen.

Additionally, the peroxide species are highly reactive and assist in the oxidation of volatile organic compounds to carbon dioxide and water. Therefore, the manganese oxide can be highly effective in oxidizing volatile organic compounds as well. In the presence of volatile organic compounds alone, the manganese oxide of the coating 40 produces carbon dioxide, water, and other substances.

At room temperature, the manganese oxide/titanium dioxide coating 40 decomposes ozone to oxygen simultaneously with oxidation of harmful volatile organic compounds to carbon dioxide, water, and other substances. Therefore, the manganese oxide/titanium dioxide photocatalytic/thermocatalytic coating acts simultaneously as both a photocatalyst and a thermocatalyst.

The highly dispersed manganese oxide particles on the surface of the titanium dioxide reduce the recombination rate of the electrons and the holes, increasing the photocatalytic activity of the coating. Preferably, the manganese oxide particles are nano-sized.

Preferably, the support for the bifunctional catalyst is titanium dioxide. In one example, the titanium dioxide is Millennium titania, Degussa P-25, or an equivalent titanium dioxide. However, it is to be understood that other photocatalytic materials or a combination of titanium dioxide with other metal oxides can be employed, as long as they are active supports for thermo-catalytic function. For example, the photocatalytic materials can be Fe₂O₃, ZnO, V₂O₅, SnO₂, or FeTiO₃. Additionally, other metal oxides can be mixed with titanium dioxide, such as Fe₂O₃, ZnO, V₂O₅, SnO₂, CuO, MnOₓ, WO₃, Co₃O₄, CeO₂, ZrO₂, SiO₂, Al₂O₃, Cr₂O₃, or NiO.

The manganese oxide/titanium dioxide can also be loaded with a metal oxide. In one example, the metal oxide is WO₃, ZnO, Fe₂O₃, V₂O₅, SnO₂, PbO, MgO, Co₃O₄, NiO, CeO₂, CuO, SiO₂, Al₂O₃, Cr₂O₃, or ZrO₂.

After passing through the honeycombs 28, the purified air then exits the air purifier through an outlet 36. The walls 38 of the air purification system 20 are preferably lined with a reflective material 42. The reflective material 42 reflects the ultraviolet light onto the surface of the open passages 30 of the honeycomb 28.

The catalytic performance of the manganese oxide/titanium dioxide coating is influenced by the preparation method. The nano-particles of manganese oxide can be generated by deposition-precipitation, co-precipitation, impregnation, or chemical vapor deposition. By employing these methods, nano-particles of manganese oxide can be generated, improving the catalytic activity.

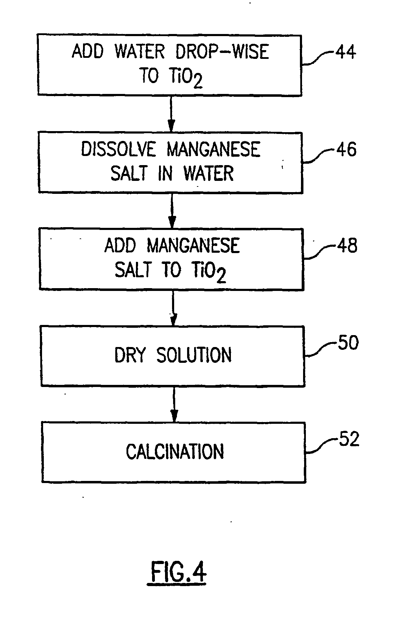

Figure 4 schematically illustrates a flowchart of the method of preparing the manganese oxide/titanium dioxide photocatalyst/thermocatalyst of the present invention. Water is added drop-wise to powder titanium dioxide to determine the point at which the pores in the titanium dioxide are filled with water, or the point of incipient wetness (step 44). This amount of water is then used to dissolve a manganese salt (manganese nitrate or preferably manganese acetate), shown in step 46. The amount of manganese salt needed is determined by the mole percentage of manganese targeted for the surface, usually 0.1 to 6 mol%.

The manganese salt solution is then added drop-wise (step 48) to the titanium dioxide. The resulting powder is then dried (step 50) at 120°C for six hours. The powder is then calcined (step 52) at 500°C for six hours to remove the acetate and nitrate. During calcination, the manganese is oxidized to form manganese oxide. After calcination, a titanium dioxide powder layered with manganese oxide nano-particles is created.

To coat manganese oxide/titanium dioxide bifunctional catalyst to a substrate, water is added to the dried manganese oxide/titanium dioxide photocatalyst/thermocatalyst to form a suspension. The suspension is applied to the surface of the honeycomb 28 by spraying, electrophoresis, or dip coating to form the manganese oxide/titanium dioxide coating 40. After the suspension is applied, the suspension is allowed to dry, forming a uniform manganese oxide/titanium dioxide coating 40 on the honeycomb 28. Preferably, the suspension has weight 1% of manganese oxide on titanium dioxide.

Although a honeycomb 28 has been illustrated and described, it is to be understood that the manganese oxide/titanium dioxide coating 40 can be applied on any structure. The voids in a honeycomb 28 are typically hexagonal in shape, but it is to be understood that other void shapes can be employed. As contaminants adsorb onto the manganese oxide/titanium dioxide coating 40 of the structure in the presence of a light source, the contaminants are oxidized into water, carbon dioxide and other substances.

The foregoing description is only exemplary of the principles of the invention. Many modifications and variations of the present invention are possible in light of the above teachings. The preferred embodiments of this invention have been disclosed, however, so that one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. An air purification system (20) comprising:
a substrate (28);
a manganese oxide/titanium dioxide coating (40) applied on said substrate, and said manganese oxide/titanium dioxide coating includes manganese oxide supported on a surface of titanium dioxide; and
a light source (32) to activate said manganese oxide/titanium dioxide coating (40), and said manganese oxide/titanium dioxide coating oxidizes contaminants that are adsorbed onto said manganese oxide/titanium dioxide coating when activated by said light source (32),

2. The air purification system (20) as recited in claim 1 wherein said manganese oxide is nano-sized.

3. The air purification system (20) as recited in claim 1 wherein said light source (32) is an ultraviolet light source.

4. The air purification system (20) as recited in claim 1 wherein photons from said light source (32) are absorbed by said manganese oxide/titanium dioxide coating (40) to form a reactive hydroxyl radical that oxidizes contaminants in the presence of oxygen and water to carbon dioxide and water.

5. The air purification system (20) as recited in claim 1 wherein said contaminants are one of a volatile organic compound and a semi-volatile organic compound including at least one of aldehyde, ketone, alcohol, aromatic, alkene, and alkane.

6. The air purification system (20) as recited in claim 1 wherein said manganese oxide/titanium dioxide coating (40) decomposes ozone.

7. The air purification system (20) as recited in claim 6 wherein said manganese oxide lowers an energy barrier of decomposition of said ozone to decompose said ozone to molecular oxygen.

8. The air purification system (20) as recited in claim 6 wherein said manganese oxide facilitates decomposition of said ozone into adsorbed atomic oxygen and adsorbed peroxide species, and said adsorbed atomic oxygen and said adsorbed peroxide species oxidize volatile organic compounds to carbon dioxide, water and other substances.

9. The air purification system (20) as recited in claim 1 further including a metal oxide on a surface of said titanium dioxide.

10. The air purification system (20) as recited in claim 9 wherein said metal oxide is at least one of WO₃, ZnO, Fe₂O₃, V₂O₅, SnO₂. PbO, MgO, Co₃O₄, NiO, CeO₂, CuO, SiO₂, Al₂O₃, Cr₂O₃, and ZrO₂.

11. The air purification system (20) as recited in claim 1 further including a metal oxide mixed with said titanium dioxide.

12. The air purification system (20) as recited in claim 11 wherein said metal oxide is at least one of WO₃, ZnO, CdS, SrTiO₃, Fe₂O₃, V₂O₅, SnO₂, FeTiO₃, PbO, MgO₃, Co₃O₄, NiO, CeO₂, CuO, SiO₂, Al₂O₃, Cr₂O₃, and ZrO₂.

13. The air purification system (20) as recited in claim 1 wherein said substrate (28) is an array of voids separated by a solid wall.

14. The air purification system (20) as recited in claim 1 further including a housing, the air purification system is in said housing, and walls (38) of said housing are lined with a reflective material (42).

15. The air purification system (20) as recited in claim 1 wherein the air purification system is at room temperature.

16. The air purification system as recited in claim 1, further comprising:
a container having an inlet (22) and an outlet (36), wherein the substrate (28) is
a porous substrate (28) inside said container, and
a device (34) for drawing a fluid into said container through said inlet (22), flowing said fluid through said porous substate (28), and expelling said fluid out of said container through said outlet (36), wherein said manganese oxide lowers an energy barrier for decomposition of ozone to oxygen wherein said coating is a catalytic coating, and wherein said light source is an ultraviolet light source (32) and photons from said ultraviolet light source are a bsorbed by said manganese oxide/titanium dioxide catalytic coating (40) to form a reactive hydroxyl radical, and said reactive hydroxyl radical oxidizes contaminants in said fluid that are adsorbed onto said manganese oxide/titanium dioxide catalytic coating (40) when activated by said ultraviolet light source (32) to water and carbon dioxide in the presence of water and oxygen.

17. A method of purifying air comprising the steps of
applying a manganese oxide/titanium dioxide catalytic coating (40) on a substrate, said manganese oxide/titanium dioxide coating including manganese oxide supported on a surface of titanium dioxide;
activating said manganese oxide/titanium dioxide catalytic coating (40);
forming a reactive hydroxyl radical;
adsorbing contaminants onto said manganese oxide/titanium dioxide catalytic coating (40);
oxidizing said contaminants with said hydroxyl radical;
lowering an energy barrier of decomposition of ozone with said manganese oxide of said manganese oxide/titanium dioxide catalytic coating (40); and
then decomposing said ozone to oxygen.

## Patentansprüche

1. Luftreinigungssystem (20), aufweisend:
ein Substrat (28);
eine auf das Substrat aufgebrachte Manganoxid/Titandioxid-Beschichtung (40), und wobei die Manganoxid/Titandioxid-Beschichtung auf einer Oberfläche von Titandioxid getragenes Manganoxid enthält: und
eine Lichtquelle (32) zum Aktivieren der Manganoxid/Titandioxid-Beschichtung (40), und wobei die Manganoxid/Titandioxid-Beschichtung Verunreinigungen, die an der Manganoxid/Titandioxid-Beschichtung adsorbiert sind, oxidiert, wenn sie durch die Lichtquelle (32) aktiviert wird.

2. Luftreinigungssystem (20) wie in Anspruch 1 angegeben, bei dem das Manganoxid Nanogröße hat.

3. Luftreinigungssystem (20) wie in Anspruch 1 angegeben, bei dem die Lichtquelle (32) eine Ultraviolettlichtquelle ist.

4. Luftreinigungssystem (20) wie in Anspruch 1 angegeben, bei dem Photonen von der Lichtquelle (32) von der Manganoxid/Titandioxid-Beschichtung (40) absorbiert werden, um ein reaktives Hydroxylradikal zu bilden, das Verunreinigungen in Anwesenheit von Sauerstoff und Wasser zu Kohlendioxid und Wasser oxidiert.

5. Luftreinigungssystem (20) wie in Anspruch 1 angegeben, bei dem die Verunreinigungen eine flüchtige organische Verbindung oder eine halbflüchtige organische Verbindung sind, einschließlich mindestens einer der Verbindungen Aldehyd, Keton, Alkohol, Aromat, Alken und Alkan.

6. Luftreinigungssystem (20) wie in Anspruch 1 angegeben, bei dem die Manganoxid/Titandioxid-Beschichtung (40) Ozon zersetzt.

7. Luftreinigungssystem (20) wie in Anspruch 6 angegeben, bei dem das Manganoxid eine Energieschwelle der Zersetzung des Ozons senkt, um das Ozon zu molekularem Sauerstoff zu zersetzen.

8. Luftreinigungssyxtem (20) wie in Anspruch 6 angegeben, bei dem das Manganoxid die Zersetzung des Ozons in adsorbierte atomare Sauerstoff-Spezies und adsorbierte Peroxid-Spezies erleichtert, und bei dem die adsorbierten atomaren Sauerstoff-Spezies und die adsorbierten Peroxid-Spezies flüchtige organische Verbindungen zu Kohlendioxid. Wasser und anderen Substanzen oxidieren.

9. Luftreinigungssystem (20) wie in Anspruch 1 angegeben, das außerdem ein Metalloxid auf einer Oberfläche des Titandioxids enthält.

10. Luftreinigungssystem (20) wie in Anspruch 9 angegeben, bei dem das Metalloxid mindestens eines der Metalloxide WO₃, ZnO, Fe₂O₃, V₂O₅, SnO₂, PbO, MgO, Co₃O₄, NiO, CeO₂, CuO, SiO₂, Al₂O₃, Cr₂O₃ und ZrO₂ ist.

11. Luftreinigungssystem (20) wie in Anspruch 1 angegeben, das außerdem ein mit dem Titandioxid gemischtes Metalloxid enthält.

12. Luftreinigungssystem (20) wie in Anspruch 11 angegeben, bei dem das Metalloxid mindestens eines der Metalloxide WO₃, ZnO, CdS, SrTiO₃, Fe₂O₃, V₂O₅, SnO₂, FeTiO₃, PbO, MgO₃, Co₃O₄, NiO, CeO₂, CuO, SiO₂, Al₂O₃, Cr₂O₃ und ZrO₂ ist.

13. Luftreinigungssystem (20) wie in Anspruch 1 angegeben, bei dem das Substrat (28) eine Anordnung von Leerräumen, die von einer ununterbrochenen Wand getrennt werden, ist.

14. Luftreinigungssystem (20) wie in Anspruch 1 angegeben, das außerdem ein Gehäuse aufweist, wobei sich das Luftreinigungssystem in dem Gehäuse befindet und Wände (38) des Gehäuses mit einem reflektierenden Material (42) ausgekleidet sind.

15. Luftreinigungssystem (20) wie in Anspruch 1 angegeben, bei dem sich das Luftreinigungssystem bei Raumtemperatur befindet.

16. Luftreinigungssystem (20) wie in Anspruch 1 angegeben, außerdem aufweisend:
einen Behälter mit einem Einlass (22) und einem Auslass (36), wobei das Substrat (28) ein poröses Substrat (28) im Inneren des Behälters ist: und
eine Vorrichtung (34) zum Ziehen eines Fluids durch den Einlass (22) in den Behälter hinein, zum Strömen-Lassen des Fluids durch das poröse Substrat (28), und zum Ausstoßen des Fluids durch den Auslass (36) aus dem Behälter heraus,
wobei das Manganoxid eine Energieschwelle der Zersetzung von Ozon zu Sauerstoff senkt,
wobei die Beschichtung eine katalytische Beschichtung ist, und wobei die Lichtquelle eine Ultraviolettlichtquelle (32) ist, und wobei Photonen von der Ultraviolettlichtquelle von der katalytischen Manganoxidmtandioxid-Beschichtung (40) absorbiert werden, um ein reaktives Hydroxylradikal zu bilden, und wobei das reaktive Hydroxylradikal Verunreinigungen in dem Fluid, die an der katalytischen Manganoxid/Titandioxid-Beschichtung (40) adsorbiert sind, bei Aktivierung durch die Ultraviolettlichtquelle (32) in Anwesenheit von Wasser und Sauerstoff zu Wasser und Kohlendioxid oxidiert.

17. Verfahren zum Reinigen von Luft, folgende Schritte aufweisend:
Aufbringen einer katalytischen Manganoxid/Titandioxid-Beschichtung (40) auf ein Substrat, wobei die Manganoxid/Titandioxid-Beschichtung ein auf einer Oberfläche von Titandioxid getragenes Manganoxid enthält;
Aktivieren der katalytischen Manganoxidmtandioxid-Beschichtung (40);
Bilden eines reaktiven Hydroxylradikals;
Adsorbieren von Verunreinigungen an der katalytischen Manganoxid/Titandioxid-Beschichtung (40):
Oxidieren der Verunreinigungen mit dem Hydroxylradikal;
Senken einer Energieschwelle der Zersetzung von Ozon mit dem Manganoxid der katalytischen Manganoxid/Titandioxid-Beschichtung (40); und
dann Zersetzen des Ozons zu Sauerstoff.

## Revendications

1. Système de purification d'air (20), comprenant :
un substrat (28) ;
un revêtement (40) d'oxyde de manganèse / dioxyde de titane appliqué sur ledit substrat, et ledit revêtement d'oxyde de manganèse /dioxyde de titane comprend de l'oxyde de manganèse supporté sur une surface de dioxyde de titane ; et
une source de lumière (32) pour activer ledit revêtement (40) d'oxyde de manganèse / dioxyde de titane et ledit revêtement d'oxyde de manganèse / dioxyde de titane oxyde les contaminants qui sont adsorbés sur ledit revêtement d'oxyde de manganèse / dioxyde de titane quand il est activé par ladite source de lumière (32).

2. Système de purification d'air (20) selon la revendication 1, dans lequel ledit oxyde de manganèse est de la taille du nanomètre.

3. Système de purification d'air (20) selon la revendication 1, dans lequel ladite source de lumière (32) est une source de lumière ultraviolette.

4. Système de purification d'air (20) selon la revendication 1, dans lequel les photons émis par ladite source de lumière (32) sont absorbés par ledit revêtement (40) d'oxyde de manganèse / dioxyde de titane pour former un radical hydroxyle réactif qui oxyde les contaminants en présence d'oxygène et d'eau en dioxyde de carbone et eau.

5. Système de purification d'air (20) selon la revendication 1, dans lequel lesdits contaminants sont soit un composé organique volatil soit un composé organique senni-volatil comprenant au moins un élément parmi un aldéhyde, une cétone, un alcool, un aromatique, un alcène et un alcade.

6. Système de purification d'air (20) selon la revendication 1, dans lequel ledit revêtement (40) d'oxyde de manganèse / dioxyde de titane décompose l'ozone.

7. Système de purification d'air (20) selon la revendication 6, dans lequel ledit oxyde de manganèse abaisse une énergie barrière de décomposition de ladite ozone pour décomposer ladite ozone en oxygène moléculaire.

8. Système de purification d'air (20) selon la revendication 6, dans lequel ledit oxyde de manganèse facilite la décomposition de ladite ozone en oxygène atomique adsorbé et en espèce peroxyde adsorbée et ledit oxygène atomique adsorbé et ladite espèce peroxyde adsorbée oxydent les composés organiques volatiles en dioxyde de carbone, eau et autres substances.

9. Système de purification d'air (20) selon la revendication 1, comprenant en outre un oxyde métallique sur une surface dudit dioxyde de titane.

10. Système de purification d'air (20) selon la revendication 9, dans lequel ledit oxyde métallique est au moins un élément parmi WO₃, ZnO, Fe₂O₃, V₂O₅, SnO₂, PbO, MgO, Co₃O₄, NiO, CeO₂, CuO, SiO₂, Al₂O₃, Cr₂O₃ et ZrO₂.

11. Système de purification d'air (20) selon la revendication 1, comprenant en outre un oxyde métallique mélangé avec ledit dioxyde de titane.

12. Système de purification d'air (20) selon la revendication 11, dans lequel ledit oxyde métallique est au moins un élément parmi WO₃, ZnO, CdS, SrTiO3, Fe₂O₃, V₂O₅, SnO₂, FeTiO₃, PbO, MgO₃, Ce₃O₄, NiO, CeO₂, CuO, SiO₂, Al₂O₃, Cr₂O₃ et ZrO₂.

13. Système de purification d'air (20) selon la revendication 1, dans lequel ledit substrat (28) est un réseau de vides séparés par une paroi solide.

14. Système de purification d'air (20) selon la revendication 1, comprenant en outre un logement, le système de purification d'air étant dans ledit logement, et les parois (38) dudit logement étant rembourrées avec un matériau réflecteur (42).

15. Système de purification d'air (20) selon la revendication 1, dans lequel le système de purification d'air est à température ambiante.

16. Système de purification d'air (20) selon la revendication 1, comprenant en outre :
un conteneur ayant un orifice d'admission (22) et un orifice d'évacuation (36), où le substrat (28) est un substrat poreux (28) à l'intérieur dudit conteneur, et
un dispositif (34) pour tirer un fluide à l'intérieur dudit conteneur à travers ledit orifice d'admission (22), amenant ledit fluide à travers ledit substrat poreux (28) et expulsant ledit fluide hors du conteneur à travers ledit orifice d'évacuation (36),
où ledit oxyde de manganèse abaisse une énergie barrière pour la décomposition de l'ozone en oxygène,
où ledit revêtement est un revêtement catalytique et où ladite source de lumière est une source de lumière ultraviolette (32) et les photons émis par ladite source de lumière sont absorbés par ledit revêtement catalytique (40) d'oxyde de manganèse / dioxyde de titane pour former un radical hydroxyle réactif, et ledit radical hydroxyle réactif oxyde les contaminants dans ledit fluide, qui sont adsorbés sur ledit revêtement catalytique (40) d'oxyde de manganèse / dioxyde de titane quand il est activé par ladite source de lumière ultraviolette (32) en eau et dioxyde de carbone en présence d'eau et d'oxygène.

17. Procédé de purification d'air comprenant les étapes consistant à :
appliquer un revêtement catalytique (40) d'oxyde de manganèse /dioxyde de titane sur un substrat, ledit revêtement d'oxyde de manganèse / dioxyde de titane comprenant un oxyde de manganèse supporté sur une surface du dioxyde de titane ;
activer ledit revêtement catalytique (40) d'oxyde de manganèse /dioxyde de titane ;
former un radical hydroxyle réactif ;
adsorber les contaminants sur ledit revêtement catalytique (40) d'oxyde de manganèse / dioxyde de titane ;
oxyder lesdits contaminants avec ledit radical hydroxyle ;
abaisser une énergie barrière de décomposition de l'ozone avec ledit oxyde de manganèse dudit revêtement catalytique (40) d'oxyde de manganèse / dioxyde de titane et
décomposer ensuite ladite ozone en oxygène.
